# EUROPEAN PATENT APPLICATION

(11) **EP 3 565 093 A1**
(43) Date of publication of application: **06.11.2019**
(21) Application number: 16926028.8
(22) Date of filing: 27.12.2016
(51) Int. Cl.: H02K 7/116

(54) **MOTOR WITH DECELERATION MECHANISM**

(71) Applicant: Mitsuba Corporation, Kiryu-shi, Gunma 376-8555 (JP)
(72) Inventor: NEGISHI, Toshihiro, Kiryu-shi Gunma 376-8555 (JP); JO, Yutaro, Kiryu-shi Gunma 376-8555 (JP)
(74) Representative: Cabinet Netter
(86) International application number: PCT/JP2016/088975
(87) International publication number: WO 2018/122984

(57) **Abstract**

A motor 20 with a speed reduction mechanism includes a first mount 45a and a second mount 46a. The first and second mounts 45a, 46a are respectively provided on the same plane that is provided in parallel to an armature shaft 34 (or a worm shaft 50) and an output shaft 70. When the gear case 41 is viewed from a direction in which the armature shaft 34 (or the worm shaft 50) does not overlap the output shaft 70, the first mount 45a is provided on an armature shaft extension region AR1 that is formed by causing the armature shaft 34 to extend in an axial direction thereof, and the second mount 46a is provided on an output shaft extension region AR2 that is formed by causing the output shaft 70 to extend in an axial direction thereof.

## Description

### TECHNICAL FIELD

The present invention relates to a motor with a speed reduction mechanism that reduces rotation of a rotating shaft to output the reduced rotation.

### BACKGROUND ART

Heretofore, as vehicles such as an automobile, there is a vehicle on which an electric sunroof apparatus, an electric sunshade apparatus, or the like is mounted. A motor with a speed reduction mechanism is adopted as a driving source for the electric sunroof apparatus, the electric sunshade apparatus, or the like. The motor with the speed reduction mechanism is so small that the motor can be mounted in a narrow space of a ceiling, but can have a large output. As such a motor with a speed reduction mechanism, there is a technique described in Patent Document 1, for example.

A motor apparatus with a speed reduction mechanism (corresponding to the motor with the speed reduction mechanism) described in Patent Document 1 includes an electric motor and a speed reduction mechanism configured to reduce rotation of the electric motor. The electric motor includes a rotating shaft member (or a rotating shaft) that is rotated by supplying electricity. The speed reduction mechanism includes a worm rotated by the rotating shaft member and a worm wheel caused to engage with the worm. An output shaft is provided at the center of rotation of the worm wheel. There is a relationship that an axial direction of the output shaft is orthogonal to an axial direction of the rotating shaft member.

Three mounts are provided outside the output shaft in a radial direction on a case in which the worm and the worm wheel are housed so as to surround the output shaft. These three mounts are fixed on a roof (or a ceiling) of a vehicle via fixing bolts.

### RELATED ART DOCUMENTS

### PATENT DOCUMENTS

Patent document 1: International Publication No. WO2016/039234A

### SUMMARY OF THE INVENTION

### PROBLEMS TO BE SOLVED BY THE INVENTION

However, in the technique disclosed in Patent Document 1 described above, the three mounts are dispersively disposed so as to surround the output shaft. Therefore, an assembling work of the motor with the speed reduction mechanism onto the ceiling is troublesome, and there is need to carry out a fastening work of fixing bolts over a worker's head. Thus, a burden on the worker was large. For this reason, for example, it was considered that the number of fixed portions is reduced to two points. However, even though the number of fixed portions is merely reduced, a posture of the motor with the speed reduction mechanism changes significantly at the time of an operation of the motor with the speed reduction mechanism. Therefore, a problem that noise becomes larger may occur.

It is an object of the present invention to provide a motor with a speed reduction mechanism capable of reducing the number of fixed portions and suppressing a postural change during operation.

### MEANS FOR SOLVING THE PROBLEM

In one aspect of the present invention, there is provided a motor with a speed reduction mechanism, the motor configured to reduce rotation of a rotating shaft to output the reduced rotation, the motor with the speed reduction mechanism including: an output shaft provided in parallel to the rotating shaft; a case configured to rotatably house the rotating shaft and the output shaft; and a first mount and a second mount provided on the case, each of the first and second mounts being attached to a mounting target. In this case, the first mount and the second mount are respectively provided on a same plane that is provided in parallel to the rotating shaft and the output shaft. When the case is viewed from a direction in which the rotating shaft does not overlap the output shaft, the first mount is provided on a rotating shaft extension region and the second mount is provided on an output shaft extension region, the rotating shaft extension region being formed by causing the rotating shaft to extend in an axial direction of the rotating shaft, the output shaft extension region being formed by causing the output shaft to extend in an axial direction of the output shaft.

In another aspect of the present invention, the first mount and the second mount are provided so as to shift to each other in the axial directions of the rotating shaft and the output shaft.

In still another aspect of the present invention, annular flanges are provided in the case and disposed coaxially with the output shaft, each of the annular flanges projecting in the axial direction of the output shaft and is supported by the mounting target.

In still another aspect of the present invention, each of the annular flanges is inserted into an inserting recessed portion of the mounting target.

In still another aspect of the present invention, the output shaft is configured to drive an opening/closing body provided on a ceiling of a vehicle to be opened and closed.

### EFFECTS OF THE INVENTION

According to the present invention, the motor with the speed reduction mechanism includes the first mount and the second mount; these first and second mounts are respectively provided on the same plane that is provided in parallel to the rotating shaft and the output shaft; and when the case is viewed from the direction in which the rotating shaft does not overlap the output shaft, the first mount is provided on the rotating shaft extension region that is formed by causing the rotating shaft to extend in the axial direction thereof, and the second mount is provided on the output shaft extension region that is formed by causing the output shaft to extend in the axial direction thereof.

Thus, even in a case where two fixed portions are provided, the rotating shaft and the output shaft are rotated, and a reaction force to twist the case acts on the case, then it is possible to effectively suppress distortion and the like of the case in addition to a postural change and backlash of the case. This is because the first mount is provided on the rotating shaft extension region and the second mount is provided on the output shaft extension region.

Further, since the first mount is provided on the rotating shaft extension region and the second mount is provided on the output shaft extension region, it is possible to suppress the case from increasing in size to a direction intersecting with the axial directions of the rotating shaft and the output shaft. Therefore, by utilizing the motor with the speed reduction mechanism with use for an electric sunshade apparatus mounted on a ceiling of a vehicle, it is possible to miniaturize the motor with the speed reduction mechanism, and this makes it possible to enlarge an opening amount of the opening/closing body.

### BRIEF DESCRIPTIONS OF THE DRAWINGS

FIG. 1 is a schematic view illustrating an outline of an electric sunshade apparatus mounted on a roof of a vehicle;
FIG. 2 is a perspective view of a motor with a speed reduction mechanism, which is used in the electric sunshade apparatus illustrated in FIG. 1;
FIG. 3 is a plan view of the motor with the speed reduction mechanism illustrated in FIG. 2;
FIG. 4 is a view when viewed from an arrow "A" of FIG. 3;
FIG. 5 is a view when viewed from an arrow "B" of FIG. 3;
FIG. 6 is a cross-sectional view taken along a C-C line of FIG. 3;
FIG. 7 is a cross-sectional view taken along a D-D line of FIG. 3;
FIG. 8 is a perspective view illustrating only a drive system of the motor with the speed reduction mechanism;
FIG. 9 is a perspective view illustrating an engaging state of a second flange part to a mounting bracket;
FIG. 10 is a perspective view illustrating an attaching procedure for a first helical gear (part 1);
FIG. 11 is a perspective view illustrating the attaching procedure for the first helical gear (part 2); and
FIG. 12 is a perspective view illustrating a clearance part provided above a gear case.

### DETAILED DESCRIPTION OF PREFERRED EMBODIMENTS

Hereinafter, one embodiment of the present invention will be described with reference to the drawings.

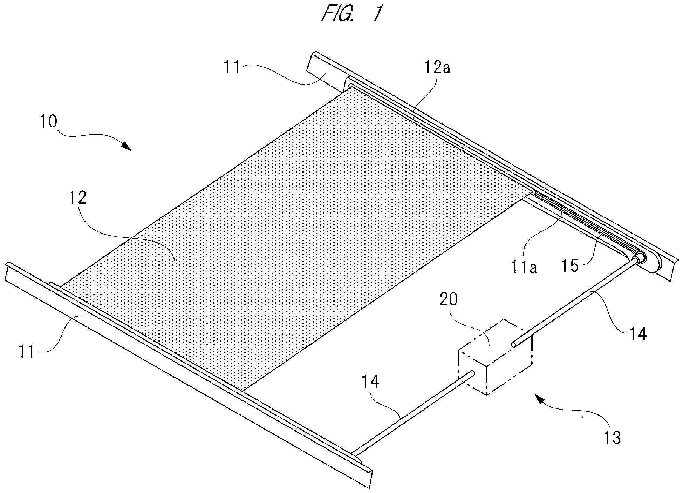

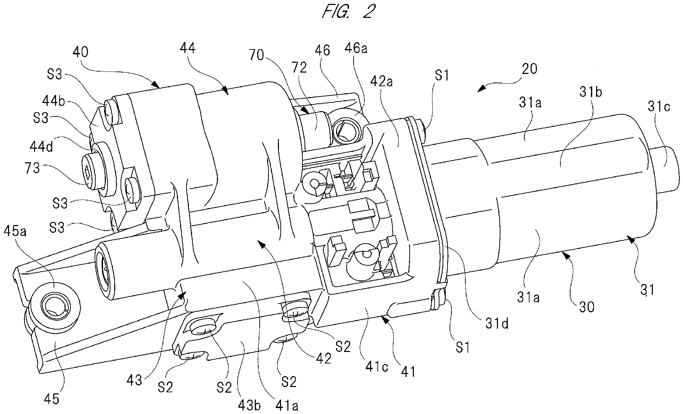

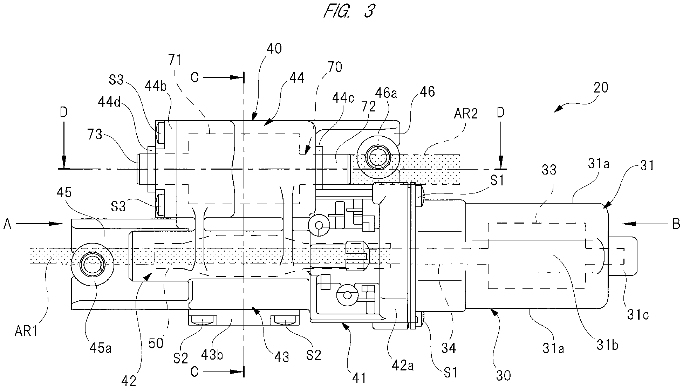

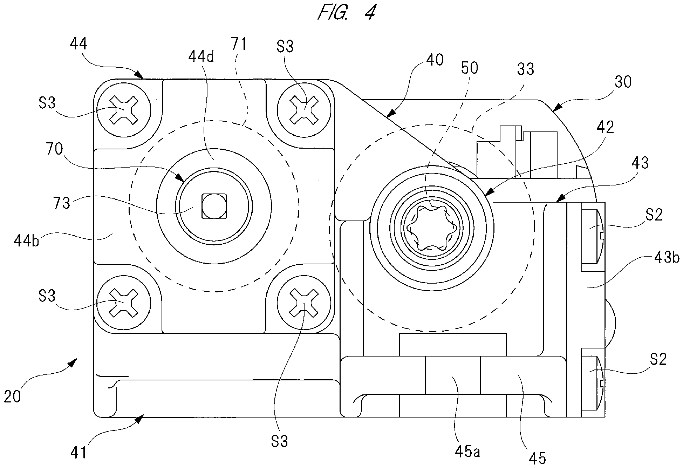

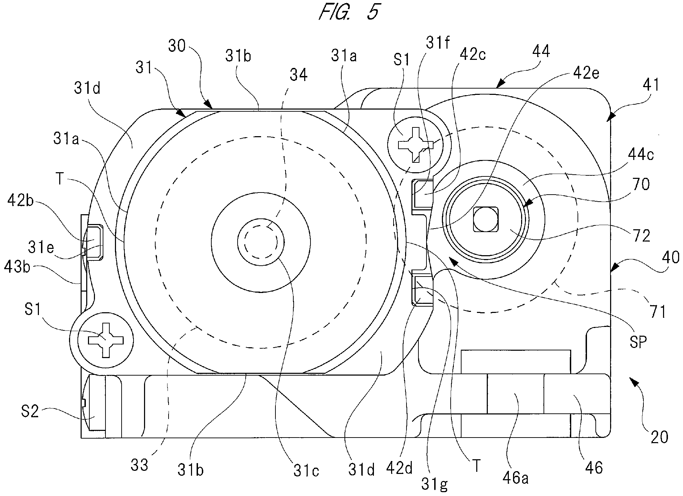

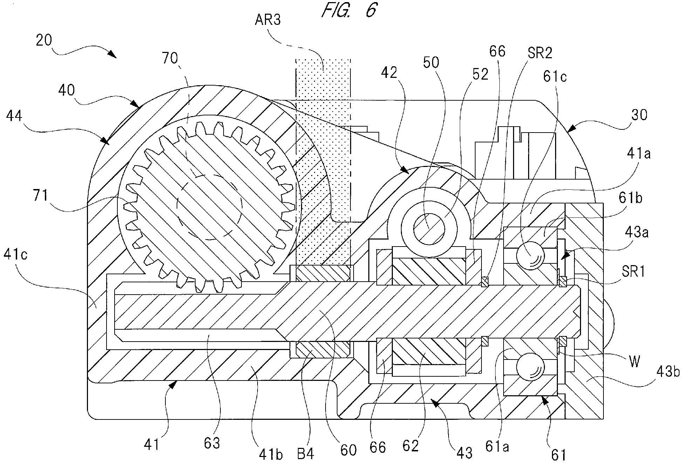

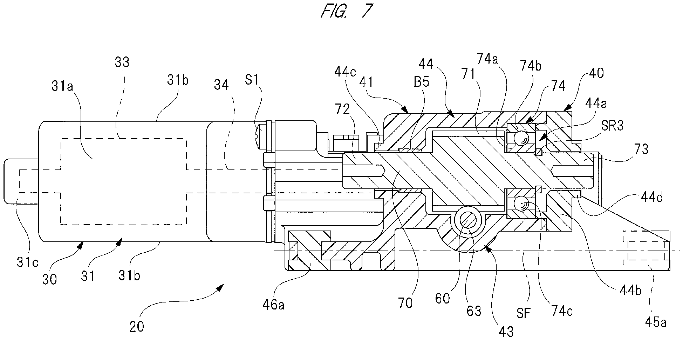

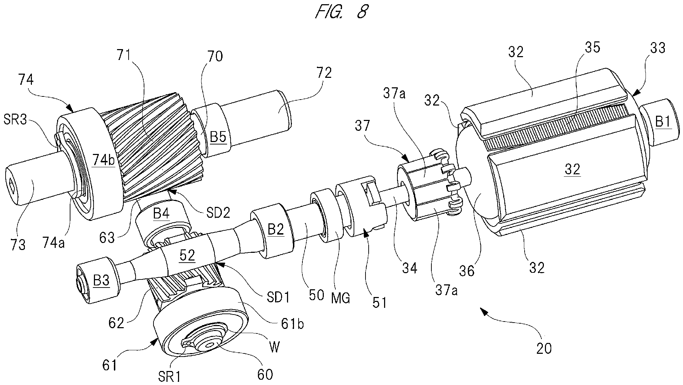

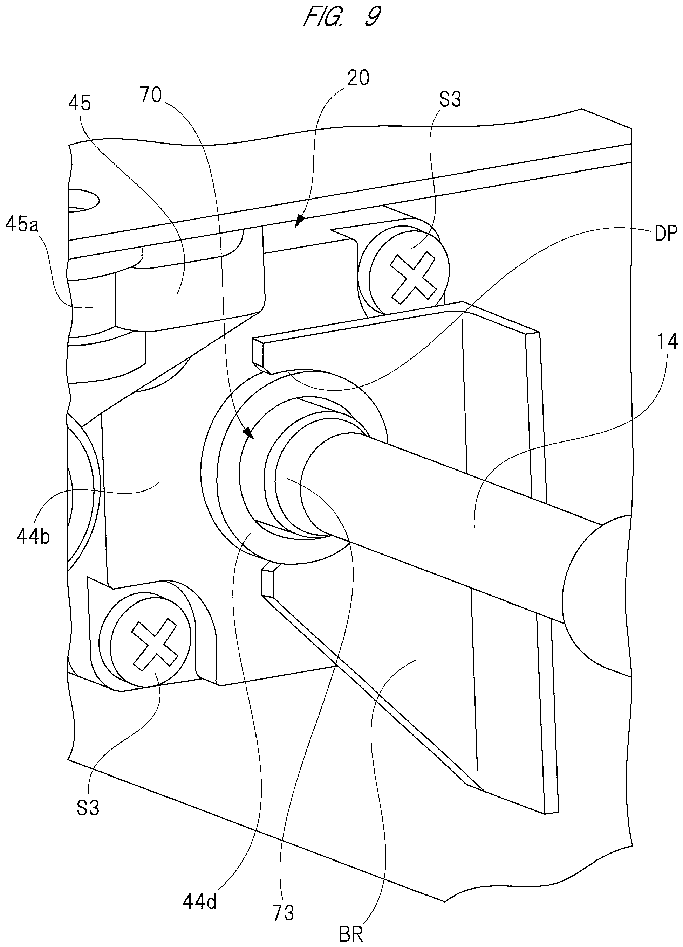

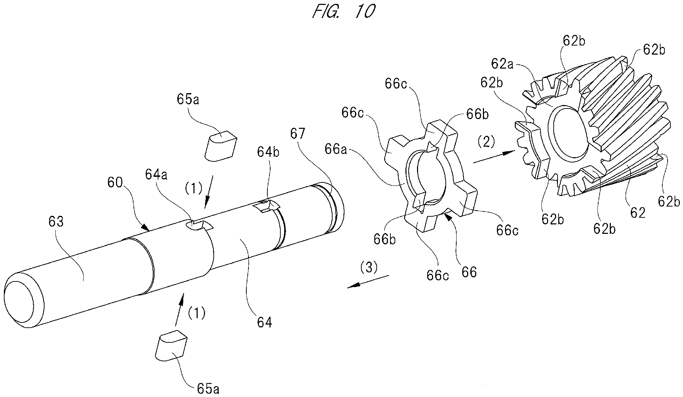

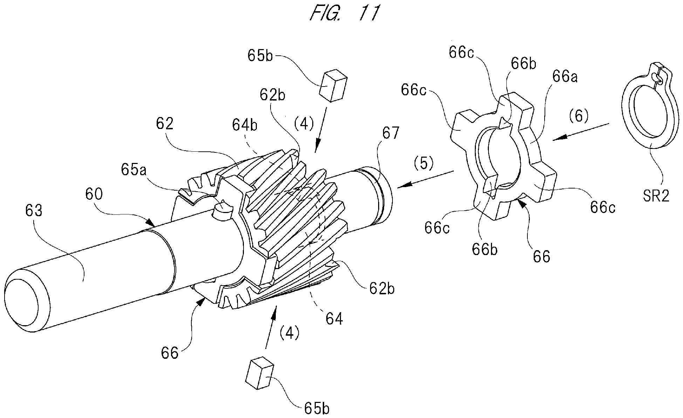

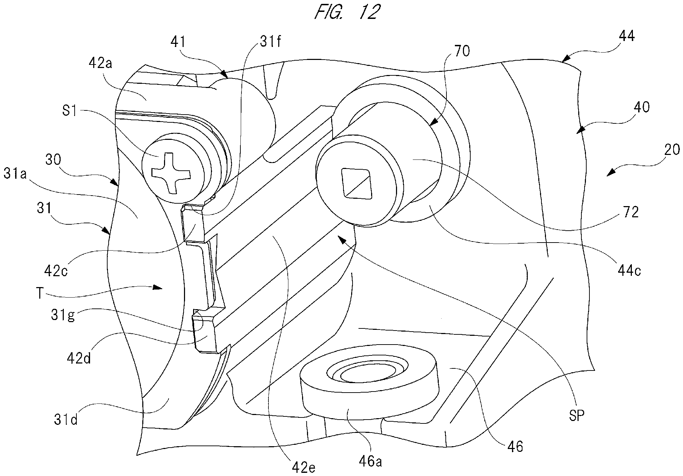

FIG. 1 illustrates a schematic view illustrating an outline of an electric sunshade apparatus mounted on a roof of a vehicle. FIG. 2 illustrates a perspective view of a motor with a speed reduction mechanism, which is used in the electric sunshade apparatus illustrated in FIG. 1. FIG. 3 illustrates a plan view of the motor with the speed reduction mechanism illustrated in FIG. 2. FIG. 4 illustrates a view when viewed from an arrow "A" of FIG. 3. FIG. 5 illustrates a view when viewed from an arrow "B" of FIG. 3. FIG. 6 illustrates a cross-sectional view taken along a C-C line of FIG. 3. FIG. 7 illustrates a cross-sectional view taken along a D-D line of FIG. 3. FIG. 8 illustrates a perspective view illustrating only a drive system of the motor with the speed reduction mechanism. FIG. 9 illustrates a perspective view illustrating an engaging state of a second flange part to a mounting bracket. FIG. 10 illustrates a perspective view illustrating an attaching procedure for a first helical gear (part 1). FIG. 11 illustrates a perspective view illustrating the attaching procedure for the first helical gear (part 2). FIG. 12 illustrates a perspective view illustrating a clearance part provided above a gear case.

An electric sunshade apparatus 10 illustrated in FIG. 1 is provided inside a vehicle interior on a glass roof (not illustrated in the drawings) provided in the roof of the vehicle (a mounting target, or a ceiling). The electric sunshade apparatus 10 serves as a sunshade that softens sunlight into the vehicle interior. The electric sunshade apparatus 10 includes a pair of guide rails 11, a sunshade 12 (a shaded portion in FIG. 1), and a driving mechanism 13. The pair of guide rails 11 is fixed on the roof of the vehicle. The sunshade 12 serves as an opening/closing body that is moved in a longitudinal direction of the guide rails 11. The driving mechanism 13 is disposed at a front side of the guide rails 11 (a middle right side in FIG. 1).

The pair of guide rails 11 is arranged in parallel so as to face to each other via a predetermined interval. A sliding groove 11a is provided on a facing surface of each of the guide rails 11. Here, only one side thereof is illustrated in FIG. 1. Sliding member 12a are respectively provided at both side of the sunshade 12 in a width direction. Each of the sliding member 12a comes into the corresponding sliding grooves 11a so as to be allowed to slide. Similarly, only one side thereof is illustrated in FIG. 1. Here, the sunshade 12 is formed of cloth or the like in a sheet-like shape. When the sunshade 12 is moved to rear sides of the guide rails 11 (that is, a left side in FIG. 1), the electric sunshade apparatus 10 becomes an "open state". When the sunshade 12 is moved to front sides of the guide rails 11, the electric sunshade apparatus 10 becomes a "close state". Namely, FIG. 1 illustrates a state where the electric sunshade apparatus 10 is in the "open state".

The driving mechanism 13 includes a motor 20 with a speed reduction mechanism disposed between the pair of guide rails 11, a pair of drive shafts 14, and driving chains 15 (here, only one side thereof is illustrated in FIG. 1). One ends of the pair of drive shafts 14 are respectively coupled to first and second coupling portions 72 and 73 (see FIG. 7), which are provided in an output shaft 70 of the motor 20 with the speed reduction mechanism. The other ends of the pair of drive shafts 14 are respectively provided in the sliding grooves 11a. Each of the driving chains 15 is provided in the corresponding sliding groove 11a, and causes the sliding member 12a to move by rotation of the drive shaft 14. Then, by operating an operating switch (not illustrated in the drawings) provided in the vehicle interior to cause the motor 20 with the speed reduction mechanism to rotate forwardly and reversely, the drive shaft 14 is rotated forwardly and reversely. This causes the driving chain 15 to be driven, whereby the sliding member 12a (that is, the sunshade 12) is moved in a front-back direction. Namely, the output shaft 70 of the motor 20 with the speed reduction mechanism is configured to drive the sunshade 12 to be opened and closed.

As illustrated in FIG. 2 and FIG. 3, the motor 20 with the speed reduction mechanism includes a motor unit 30 and a gear unit 40.

The motor unit 30 includes a yoke 31. The yoke 31 is formed into a bottomed cylindrical shape by press working of the like of a steel sheet. Specifically, as illustrated in FIG. 5, the yoke 31 includes a pair of circular arc portions 31a, a pair of flat plate portions 31b, and a stepped bottom portion 31c. Each of the pair of circular arc portions 31a is curved around a shaft center of the yoke 31. The pair of flat plate portions 31b continues into these circular arc portions 31a, and are disposed in parallel to each other. Herewith, a cross-sectional shape of the yoke 31 along a direction intersecting with an axial direction of yoke 31 is formed into a substantially oval shape.

Further, yoke flanges 31d are respectively provided at an opposite side to the bottom portion 31c along the axial direction of the yoke 31 and in portions corresponding to the pair of circular arc portions 31a. Each of the yoke flanges 31d swells outward in the radial direction. The pair of yoke flanges 31d is respectively fixed to a yoke fixing unit 42a of a gear case 41 (see FIG. 2) by means of a pair of fixing screws S1. Namely, the motor unit 30 and the gear unit 40 are rigidly coupled to each other by the pair of fixing screws S1.

Four magnets (that is, permanent magnets) 32 as illustrated in FIG. 8 are mounted inside the yoke 31 in the radial direction. A cross-sectional shape of each of these permanent magnets 32 is formed into a substantially circular arc shape. An armature (or a rotor) 33 is rotatably housed inside each of the permanent magnets 32 in the radial direction via a predetermined gap (that is, an air gap) .

An armature shaft (or a rotating shaft) 34 is provided at the center of rotation of the armature 33. One side of the armature shaft 34 in an axial direction thereof (a middle right side in FIG. 8) is rotatably supported by a first radial bearing B1. The first radial bearing B1 is mounted on the bottom portion 31c of the yoke 31. This allows the armature 33 to be rotated inside the yoke 31 in the radial direction. Note that a slide bearing that is called a "metal bearing" is adopted as the first radial bearing B1.

An armature core 35 configured by laminating a plurality of steel sheets is fixed around the armature shaft 34. A plurality of slots (for example, 10 pieces, not illustrated in the drawings) is provided in the armature core 35. A plurality of coils 36 (not illustrated in detail in the drawings) is respectively wound around these slots with a predetermined winding method and the number of coils.

Further, a commutator 37 provided with a plurality of segments 37a is fixed to the armature shaft 34 so as to be adjacent to the armature core 35. Each of coil ends (not illustrated in the drawings) of the plurality of coils 36 is electrically connected to the plurality of segments 37a.

Moreover, each of a plurality of brushes (not illustrated in the drawings) is slidably contact with the periphery of the commutator 37. A driving current is supplied to each of the coils 36 with predetermined timing via the plurality of brushes and the commutator 37. This causes an electromagnetic force to be generated in the armature 33, whereby the armature 33 is rotated in a predetermined rotational direction with a predetermined rotational speed.

Thus, an electric motor with brushes is adopted in the motor unit 30 according to the present embodiment. However, it is also possible to adopt a brushless electric motor (that is, an electric motor with no brush) in place of the electric motor with brushes as the motor unit 30.

As illustrated in FIG. 2 to FIG. 7, the gear unit 40 includes the gear case (case) 41. The gear case 41 is formed into a substantially hollow box shape by injection molding of a resin material such as plastic. The gear case 41 includes a ceiling wall part 41a, a bottom wall part 41b, and a side wall part 41c. A worm shaft housing portion 42, an intermediate shaft housing portion 43, and an output shaft housing portion 44 are provided in the gear case 41 so as to be surrounded by the ceiling wall part 41a, the bottom wall part 41b, and the side wall part 41c.

A worm shaft (or rotating shaft) 50 is rotatably housed inside the worm shaft housing portion 42 (see FIG. 8). The yoke fixing unit 42a is provided at the side of the yoke 31 along its longitudinal direction. The pair of yoke flanges 31d provided in the yoke 31 is respectively fixed rigidly to this yoke fixing unit 42a by the pair of fixing screws S1. Namely, an opening portion (not illustrated in the drawings) of the worm shaft housing portion 42 is closed by the yoke 31.

The intermediate shaft housing portion 43 is disposed at the opposite side to the yoke 31 side along a longitudinal direction of the worm shaft housing portion 42. An intermediate shaft 60 (see FIG. 8) is rotatably housed in the inside of the intermediate shaft housing portion 43. As illustrated in FIG. 6, the intermediate shaft housing portion 43 is extended in a direction intersecting with an extending direction of the worm shaft 50, that is, a short side direction intersecting with a longitudinal direction of the motor 20 with the speed reduction mechanism. A first opening 43a is formed at one side of the intermediate shaft housing portion 43 in the longitudinal direction thereof (a middle right side in FIG. 6). The first opening 43a is closed by a first cover member 43b made of steel material. Here, the first cover member 43b constitutes a part of the case according to the present invention, and is formed into a substantially square shape. Four corners of the first cover member 43b are rigidly fixed to the gear case 41 by four fixing screws S2 (see FIG. 2).

Note that a relatively large reaction force acts on the intermediate shaft 60 in an axial direction thereof from the output shaft 70. For that reason, by making the first cover member 43b by steel material, fixing strength with respect to the axial direction of the intermediate shaft 60 is secured sufficiently. This makes it possible to surely prevent the intermediate shaft 60 from being moved toward the axial direction thereof. Therefore, it is possible to make operating noise (mechanical noise) of the motor 20 with the speed reduction mechanism smaller. In particular, since the electric sunshade apparatus 10 is disposed over a head of a driver or an occupant, improvement of silence is one of problems to be solved.

The output shaft housing portion 44 is disposed at the opposite side to the first cover member 43b along a short side direction of the motor 20 with the speed reduction mechanism. The output shaft 70 (see FIG. 8) is rotatably housed inside the output shaft housing portion 44. As illustrated in FIG. 7, the output shaft housing portion 44 extends in an extending direction of the armature shaft 34. A second opening 44a is formed at one side of the output shaft housing portion 44 in a longitudinal direction thereof (a middle right side in FIG. 7). The second opening 44a is closed by a second cover member 44b made of resin material. Here, the second cover member 44b constitutes a part of the case according to the present invention. The second cover member 44b is formed into a substantially square shape. Four corners of the second cover member 44b are rigidly fixed to the gear case 41 by four fixing screws S3 (see FIG. 2).

Note that the drive shafts 14 (see FIG. 1) are respectively coupled to both ends of the output shaft 70 in an axial direction thereof via the first and second coupling portions 72 and 73. Therefore, a large reaction force does not act on the output shaft 70 in the axial direction thereof unlike the intermediate shaft 60. For that reason, the second cover member 44b does not require rigidness as much as that of the first cover member 43b. Therefore, in preference to weight saving of the motor 20 with the speed reduction mechanism, the second cover member 44b is made of resin.

As illustrated in FIG. 2 and FIG. 3, a first mount fixing unit 45 is provided integrally with the worm shaft housing portion 42 at a side of the worm shaft housing portion 42 along a short side direction (a vertical direction in FIG. 3) of the gear case 41 and at the opposite side to a side of the yoke fixing unit 42a of the worm shaft housing portion 42 along a longitudinal direction of the gear case 41 (a horizontal direction in FIGS. 2 and 3). The first mount fixing unit 45 projects toward the opposite side to the yoke fixing unit 42a side with respect to the worm shaft housing portion 42 along the longitudinal direction of the gear case 41. The first mount fixing unit 45 is disposed at an end of the motor 20 with the speed reduction mechanism opposite to the yoke 31 side along the longitudinal direction of the motor 20 with the speed reduction mechanism.

A first mount 45a is installed in the first mount fixing unit 45. The first mount 45a is made of elastic material such as natural rubber. The first mount 45a is formed into a substantially cylindrical shape. A fixing bolt (not illustrated in the drawings) for fixing the motor 20 with the speed reduction mechanism to the roof of the vehicle is inserted through the central portion of the first mount 45a.

Further, a second mount fixing unit 46 is provided integrally with the output shaft housing portion 44 at the output shaft housing portion 44 side along the short side direction of the gear case 41 and at the yoke fixing unit 42a side of the output shaft housing portion 44 along the longitudinal direction of the gear case 41. The second mount fixing unit 46 projects toward the yoke fixing unit 42a side with respect to the output shaft housing portion 44 along the longitudinal direction of the gear case 41. The second mount fixing unit 46 is disposed at a substantially central portion of the motor 20 with the speed reduction mechanism along the longitudinal direction thereof. A second mount 46a having the same structure as the first mount 45a is mounted on the second mount fixing unit 46.

By attaching the first mount 45a and the second mount 46a to the roof of the vehicle in this manner, the motor 20 with the speed reduction mechanism is elastically supported on the roof of the vehicle via the first mount 45a and the second mount 46a. Herewith, vibration of the motor 20 with the speed reduction mechanism is hardly transmitted to the vehicle.

Hereinafter, a positional relation of the first mount 45a and the second mount 46a with respect to the gear case 41 will be described in further detail with reference to FIG. 3 and FIG. 7.

First, as illustrated in FIG. 7, each of the first mount 45a and the second mount 46a is disposed at one side (that is, a lower side) of the motor 20 with the speed reduction mechanism along a thickness direction thereof (an up-and-down direction in FIG. 7). Each of the first mount 45a and the second mount 46a is disposed on a plane SF in parallel to the armature shaft 34 and the output shaft 70. Namely, the first mount 45a and the second mount 46a are disposed on the same plane as each other.

Further, as illustrated in FIG. 3, the first mount 45a and the second mount 46a are disposed so as to shift to each other in a direction intersecting (or crossing) with both the axial direction of the armature shaft 34 (and the worm shaft 50) and the axial direction of the output shaft 70. Namely, the first mount 45a and the second mount 46a are disposed with a predetermined interval in the short side direction of the motor 20 with the speed reduction mechanism (the vertical direction in FIG. 3).

Moreover, as illustrated in FIG. 3, the first mount 45a and the second mount 46a are disposed so as to shift to each other with respect to the axial direction of the armature shaft 34 (or the worm shaft 50) and the axial direction of the output shaft 70. Namely, the first mount 45a and the second mount 46a are disposed with a predetermined interval in the longitudinal direction of the motor 20 with the speed reduction mechanism (that is, a horizontal direction in FIG. 3).

As illustrated in FIG. 3, when the motor 20 with the speed reduction mechanism (the gear case 41) is viewed from a direction in which the armature shaft 34 (or the worm shaft 50) does not overlap the output shaft 70, that is, the direction intersecting (or crossing) with the direction in which the armature shaft 34 (or the worm shaft 50) does not overlap the output shaft 70, the first mount 45a is disposed on an axis line of the armature shaft 34.

More specifically, the first mount 45a is disposed in the vicinity of the worm shaft housing portion 42 on an armature shaft extension region (or a rotating shaft extension region) AR1 (a shaded portion in FIG. 3). The armature shaft extension region AR1 is formed by causing the armature shaft 34 to extend in an axial direction of the armature shaft 34. On the other hand, the second mount 46a is disposed on an axis line of the output shaft 70. More specifically, the second mount 46a is disposed in the vicinity of the output shaft housing portion 44 on an output shaft extension region AR2 (a shaded portion in FIG. 3). The output shaft extension region AR2 is formed by causing the output shaft 70 to extend in the axial direction of the output shaft 70.

Here, the armature shaft extension region AR1 extends in a direction from the yoke 31 toward the gear case 41 of the motor 20 with the speed reduction mechanism. The output shaft extension region AR2 extends in a direction from the gear case 41 toward the yoke 31 of the motor 20 with the speed reduction mechanism.

Herewith, it is possible to fix the motor 20 with the speed reduction mechanism with good balance by the first mount 45a and the second mount 46a even though the number of fixed portions to the roof of the vehicle is two. More specifically, the first mount 45a and the second mount 46a are respectively disposed on the axis lines of the armature shaft 34 and the output shaft 70. Therefore, even though the armature shaft 34 and the output shaft 70 are rotated and a reaction force to twist the gear case 41 with respect to the gear case 41 acts on the gear case 41, it is possible to effectively suppress backlash or distortion of the gear case 41.

As illustrated in FIG. 3 and FIG. 7, a first flange part 44c and a second flange part 44d are respectively provided on the output shaft housing portion 44 and the second cover member 44b. each of the first flange part 44c and the second flange part 44d projects in the axial direction of the output shaft 70. These first and second flange parts 44c and 44d are formed into an annular shape, and constitute annular flanges according to the present invention. The first and second flange parts 44c and 44d are disposed coaxially with the output shaft 70. As illustrated in FIG. 9, the first and second flange parts 44c and 44d are provided for positioning the motor 20 with the speed reduction mechanism at a predetermined position on the roof of the vehicle. Specifically, each of the first and second flange parts 44c and 44d is inserted into an inserting recessed portion DP of a mounting bracket (mounting target) BR, which is provided in the roof of the vehicle, and supported.

This makes it possible for a worker to easily carry out an installation work of the motor 20 with the speed reduction mechanism into a narrow space in the roof. Here, FIG. 9 illustrates only the side of the second flange part 44d. However, the mounting bracket BR similar to that illustrated in FIG. 9 is also provided at the side of the first flange part 44c.

The worm shaft 50 is rotatably housed inside the worm shaft housing portion 42. As illustrated in FIG. 8, the worm shaft 50 is disposed coaxially with the armature shaft 34, and is rotated by the armature shaft 34 via a coupling member 51. Namely, the armature shaft 34 and the worm shaft 50 are rotatably coupled integrally by the coupling member 51.

An annular sensor magnet MG is provided at a base end side of the worm shaft 50 in the longitudinal direction thereof (a middle right side in FIG. 8) so as to be adjacent to the coupling member 51. Further, a Hall sensor (not illustrated in the drawings) is provided in the vicinity of the sensor magnet MG. The Hall sensor outputs a rectangular wave signal with rotation of the sensor magnet MG. A controller (not illustrated in the drawings) then detects the rectangular wave signal from the Hall sensor. Herewith, the controller is configured to grasp a rotational state of the worm shaft 50, and control the rotational state of the armature shaft 34.

A first worm 52 (not illustrated in detail in the drawings) is integrally provided at the opposite side of the sensor magnet MG along the longitudinal direction of the worm shaft 50. The first worm 52 is formed by component rolling on the worm shaft 50 made of steel material.

A second radial bearing B2 and a third radial bearing B3 are respectively provided at both sides of the first worm 52 in an axial direction thereof. These second and third radial bearings B2 and B3 are fixed to the inside of the worm shaft housing portion 42. This makes it possible to cause the worm shaft 50 to rotate smoothly without shaking inside the worm shaft housing portion 42. Note that a slide bearing that is called "metal bearing" is also adopted as the second and third radial bearings B2 and B3 in the similar manner to the first radial bearing B1.

As illustrated in FIG. 6 and FIG. 8, the intermediate shaft 60 is rotatably housed inside the intermediate shaft housing portion 43. The intermediate shaft 60 is formed of steel material, and extends in a direction intersecting with the worm shaft 50. A first ball bearing 61 is fixed to one side of the intermediate shaft 60 in the axial direction thereof (a middle right side in FIG. 6). The first ball bearing 61 includes an inner race 61a, an outer race 61b, and a plurality of steel balls 61c rollably provided therebetween.

The inner race 61a is fixed by pressing the inner race 61a into one side of the intermediate shaft 60 in the axial direction thereof, and is prevented from coming out therefrom by a washer W and a first snap ring SR1. Further, as illustrated in FIG. 6, the outer race 61b is sandwiched between the gear case 41 and the first cover member 43b. Namely, the first ball bearing 61 is supported by the gear case 41 and the first cover member 43b. This causes the intermediate shaft 60 to become a state where movement of the intermediate shaft 60 in the axial direction thereof is regulated inside the intermediate shaft housing portion 43, and makes it possible to cause the intermediate shaft 60 to rotate smoothly.

The intermediate shaft 60 becomes the state where the movement thereof in the axial direction is regulated by the first ball bearing 61 in this manner. Therefore, there is no need to provide thrust bearings or the like for supporting the intermediate shaft 60 from the axial direction thereof at both ends of the intermediate shaft 60 in the axial direction thereof. This causes dimension of the intermediate shaft 60 in the gear case 41 along the axial direction thereof (that is, dimension thereof along the short side direction of the gear case 41) to be suppressed from becoming larger. In other words, the motor 20 with the speed reduction mechanism can achieve both reduction of the number of parts and miniaturization.

A first helical gear 62 made of resin material such as plastic is provided at one side of the intermediate shaft 60 in the axial direction thereof and in the vicinity of the first ball bearing 61. The first worm 52 is caused to engage with this first helical gear 62. Namely, the first worm 52 and the first helical gear 62 constitutes a first speed reduction mechanism SD1 configured by a worm reducer. Specifically, the first speed reduction mechanism SD1 is configured to reduce rotation of the armature shaft 34 (or the worm shaft 50) to a predetermined rotational speed, and output the reduced and high-torque rotational force from the intermediate shaft 60.

Further, a second worm 63 (not illustrated in detail in the drawings) is integrally provided at the other side of the intermediate shaft 60 in the axial direction thereof (a left side in FIG. 6). The second worm 63 is formed on the intermediate shaft 60 made of steel material by component rolling or the like.

Moreover, a fourth radial bearing B4 is mounted between the first helical gear 62 and the second worm 63 along the axial direction of the intermediate shaft 60. A slide bearing that is called "metal bearing" is also adopted as this fourth radial bearing B4 in the similar manner to the first radial bearing B1. As illustrated in FIG. 8, this fourth radial bearing B4 is provided between the first worm 52 and a second helical gear 71 along the axial direction of the intermediate shaft 60 when the motor 20 with the speed reduction mechanism is viewed from a direction in which the first worm 52 of the worm shaft 50 does not overlap the second helical gear 71 of the output shaft 70. More specifically, as illustrated in FIG. 6, the fourth radial bearing B4 is disposed in a gap region AR3 between the first worm 52 and the second helical gear 71.

As illustrated in FIG. 7 and FIG. 8, the output shaft 70 is rotatably housed inside the output shaft housing portion 44. The output shaft 70 is formed of steel material, and extends in a direction intersecting with the intermediate shaft 60. The second helical gear 71 is integrally provided at a central portion of the output shaft 70 in the axial direction thereof. the second worm 63 engages with this second helical gear 71. Namely, the second worm 63 and the second helical gear 71 constitutes a second speed reduction mechanism SD2 configured by a worm reducer. Specifically, the second speed reduction mechanism SD2 is configured to reduce rotation of the intermediate shaft 60 to a predetermined rotational speed, and output the reduced and high-torque rotational force from the output shaft 70.

Thus, the motor 20 with the speed reduction mechanism includes only the two worm reducers (that is, the first speed reduction mechanism SD1 and the second speed reduction mechanism SD2).

The output shaft 70 is in parallel with respect to the armature shaft 34 and the worm shaft 50. The first coupling portion 72 and the second coupling portion 73 are respectively provided at both ends of the output shaft 70 in the axial direction thereof. Specifically, the first coupling portion 72 is provided at a side of the yoke 31 along the axial direction of the output shaft 70, and the second coupling portion 73 is provided at the opposite side of the yoke 31 (a side of the first mount 45a) along the axial direction of the output shaft 70.

As illustrated in FIG. 9, the pair of drive shafts 14 is respectively coupled to these first and second coupling portion 72 and 73 so that power can be transmitted. Since the drive shafts 14 are respectively coupled to both ends of the output shaft 70 in the axial direction thereof in this manner, a reaction force to move the output shaft 70 in the axial direction thereof does not act on the output shaft 70.

A second ball bearing 74 is fixed at one side of the output shaft 70 in the axial direction thereof (a middle right side in FIG. 7). The second ball bearing 74 includes an inner race 74a, an outer race 74b, and a plurality of steel balls 74c rollably provided therebetween.

The inner race 74a is fixed by pressing the inner race 74a into one side of the output shaft 70 in the axial direction, and is prevented from coming out therefrom by a third snap ring SR3. Further, as illustrated in FIG. 7, the outer race 74b is sandwiched between the gear case 41 and the second cover member 44b. Namely, the second ball bearing 74 is supported by the gear case 41 and the second cover member 44b. This causes the output shaft 70 to become a state where movement of the output shaft 70 in the axial direction thereof is regulated inside the output shaft housing portion 44, and makes it possible to cause the output shaft 70 to rotate smoothly.

Moreover, a fifth radial bearing B5 is mounted at the other side of the output shaft 70 in the axial direction thereof (a left side in FIG. 7). A slide bearing that is called "metal bearing" is also adopted as this fifth radial bearing B5 in the similar manner to the first radial bearing B1. An outer portion of the fifth radial bearing B5 is fixed in the vicinity of the first flange part 44c of the gear case 41.

Here, the first helical gear 62 is made of resin material such as plastic, but it is required that the first helical gear 62 is rigidly fixed to the intermediate shaft 60 made of steel material. Therefore, in the motor 20 with the speed reduction mechanism according to the present embodiment, as illustrated in FIG. 10 and FIG. 11, a fixing structure of the first helical gear 62 to the intermediate shaft 60 is designed.

A gear mounting portion 64 on which the first helical gear 62 is to be mounted is provided in the intermediate shaft 60. A pair of first key grooves 64a and a pair of second key grooves 64b are formed at both sides of the gear mounting portion 64 in an axial direction thereof. Each of the pair of first key grooves 64a is provided at a side of the second worm 63 along the axial direction of the gear mounting portion 64. The pair of first key grooves 64a is disposed so as to be opposite to each other at 180° interval in a circumferential direction of the gear mounting portion 64. On the other hand, each of the pair of second key grooves 64b is provided at the opposite side of the second worm 63 along the axial direction of the gear mounting portion 64. The pair of second key grooves 64b is disposed so as to be opposite to each other at 180° interval in the circumferential direction of the gear mounting portion 64. Note that the pair of first key grooves 64a and the pair of second key grooves 64b are aligned straight in the axial direction of the intermediate shaft 60. Further, only one of the first key grooves 64a and only one of the second key grooves 64b are illustrated in FIG. 10 and FIG. 11.

A pair of first keys 65a (see FIG. 10) is to be respectively inserted into the pair of first key grooves 64a. A pair of second keys 65b (see FIG. 11) is to be respectively inserted into the pair of second key grooves 64b. Each of these first and second keys 65a and 65b is formed of steel material into a substantially rectangular parallelepiped shape. In a state where the first and second keys 65a and 65b are respectively inserted into the first and second key grooves 64a and 64b, a part of each of the first and second keys 65a and 65b projects outward in a radial direction of the gear mounting portion 64. Namely, height dimension of each of the first and second keys 65a and 65b becomes larger than depth dimension of each of the first and second key grooves 64a and 64b.

Annular plates 66 made of steel material are respectively mounted on the pair of first keys 65a and the pair of second keys 65b. Specifically, each of the annular plates 66 includes a body portion 66a, a pair of engaging recessed portions 66b provided inside the body portion 66a in a radial direction thereof, and four engaging projected portions 66c provided outside the body portion 66a in the radial direction thereof. Each of the pair of first keys 65a and the pair of second keys 65b comes into the corresponding pair of engaging recessed portions 66b. Therefore, each of the annular plates 66 is rigidly fixed so as not to be allowed to relatively rotate with respect to the intermediate shaft 60.

Plate housing portions 62a for housing the annular plate 66 are respectively provided at both sides of the first helical gear 62 in an axial direction thereof. This plate housing portions 62a is provided so as to be depressed in the axial direction of the first helical gear 62. By respectively housing the annular plates 66 in the plate housing portions 62a, the first helical gear 62 is rotated together with the pair of annular plates 66. Note that only one of the plate housing portions 62a is illustrated in FIG. 10 and FIG. 11.

More specifically, four housing recessed portions 62b are provided in each of the plate housing portions 62a provided at both side of the first helical gear 62 in the axial direction thereof. The four engaging projected portions 66c of the annular plate 66 are respectively housed in the four housing recessed portions 62b. Herewith, rotational force of the intermediate shaft 60 is transmitted from the four engaging projected portions 66c of each of the pair of annular plates 66 (total eight engaging projected portions 66c) to the first helical gear 62. The rotational force of the intermediate shaft 60 can be transmitted to the first helical gear 62 in a state where the rotational force is dispersed from the total eight engaging projected portions 66c in this manner. Therefore, it is possible to surely prevent the first helical gear 62 made of resin from being damaged due to concentration of stress on a part of the first helical gear 62 made of resin. This makes it possible to transmit a larger rotational force to the first helical gear 62.

Here, an assembling procedure of the first helical gear 62 onto the intermediate shaft 60 will be described. First, as indicated by arrows (1) in FIG. 10, the pair of first keys 65a is respectively mounted into the pair of first key grooves 64a. Subsequently, as indicated by arrow (2), one of the annular plates 66 is mounted on the plate housing portions 62a at one side of the first helical gear 62 in the axial direction thereof (the second worm 63 side) . At this time, the four engaging projected portions 66c are respectively housed in the four housing recessed portions 62b.

Then, as indicated by arrow (3), the first helical gear 62 on which the one of the annular plates 66 is mounted is further mounted on the gear mounting portion 64. At this time, the pair of first keys 65a is respectively caused to come into the pair of engaging recessed portions 66b.

Subsequently, as indicated by arrow (4) in FIG. 11, the pair of second keys 65b is respectively mounted into the pair of second key grooves 64b. Then, as indicated by arrow (5), the other of the annular plates 66 is mounted on the gear mounting portion 64. At this time, the pair of second keys 65b is respectively caused to come into the pair of engaging recessed portions 66b. Further, the other of the annular plates 66 is housed in the plate housing portions 62a (not illustrated in the drawings) at the other side of the first helical gear 62 in the axial direction thereof (at the opposite side of the second worm 63). At this time, the four engaging projected portions 66c are respectively housed into the four housing recessed portions 62b.

Subsequently, as indicated by arrow (6), a second snap ring SR2 is mounted on the intermediate shaft 60. Specifically, the second snap ring SR2 is fitted into an annular groove 67. The annular groove 67 is provided at the opposite side of the second worm 63 along the axial direction of the intermediate shaft 60. This causes the first helical gear 62 to be prevented from coming out therefrom by the second snap ring SR2, and assembly (or fixation) of the first helical gear 62 to the intermediate shaft 60 is completed.

Here, in the motor 20 with the speed reduction mechanism according to the present embodiment, the motor 20 is miniaturized as described above. Therefore, contrivance as follows is further applied thereto.

Specifically, as illustrated in FIG. 5 and FIG. 12, as the contrivance, the yoke flanges 31d of the yoke 31 can be easily positioned with respect to the yoke fixing unit 42a of the gear case 41, and a space SP is secured so that the drive shaft 14 (see FIG. 1 and FIG. 9) can be easily coupled in the vicinity of the first coupling portion 72 of the output shaft 70.

As illustrated in FIG. 5 and FIG. 12, total three positioning protrusions, that is, first, second, and third positioning protrusions 42b, 42c, and 42d are provided on an abutting surface onto which the yoke flanges 31d of the yoke fixing unit 42a abuts. Each of these first, second, and third positioning protrusions 42b, 42c, and 42d projects toward the yoke 31, and a cross-sectional shape thereof along a direction intersecting with a projecting direction is formed into a substantially quadrangular shape.

The first positioning protrusion 42b of the first, second, and third positioning protrusions 42b, 42c, and 42d is provided so as to correspond to one of the circular arc portions 31a (a side of the first cover member 43b) of the pair of circular arc portions 31a in the yoke 31, and is disposed at a portion corresponding to a top portion T of the circular arc portion 31a. On the other hand, the other second and third positioning protrusions 42c and 42d are provided so as to correspond to the other of the circular arc portions 31a (a side of the output shaft 70) of the pair of circular arc portions 31a in the yoke 31, and are respectively disposed at portions that are shifted from the top portion T of the circular arc portion 31a toward the side of the pair of flat plate portions 31b.

These first, second, and third positioning protrusions 42b, 42c, and 42d respectively come into first, second, and third positioning recesses 31e, 31f, and 31g provided in the pair of yoke flanges 31d. This makes it possible to position the yoke 31 at a regular position with respect to the gear case 41, and it is possible to improve assembling workability (or connecting workability) between the motor unit 30 and the gear unit 40.

Here, the pair of fixing screws S1 that fixes the yoke 31 to the gear case 41 is arranged at positions avoiding the first, second, and third positioning recesses 31e, 31f, and 31g. This makes it possible to relatively enlarge a "positioning mechanism" composed of the first, second, and third positioning protrusions 42b, 42c, and 42d and the first, second, and third positioning recesses 31e, 31f, and 31g. Therefore, it is possible to improve fixing strength at the time of positioning (temporal fixation) while improving the assembling workability (or the connecting workability).

Further, a depressed portion 42e is formed between the second positioning protrusion 42c and the third positioning protrusion 42d. This depressed portion 42e is provide on the gear case 41, and is depressed toward the armature 33. Further, the depressed portion 42e is disposed in the vicinity of the first coupling portion 72 (substantially just beside it). This makes it possible to provide the predetermined space SP in an area around the gear case 41, especially a complicated area around the first coupling portion 72. Therefore, it is possible to easily carry out a coupling work of the drive shaft 14 to the first coupling portion 72.

In other words, by disposing each of the second and third positioning protrusions 42c and 42d so as to be shifted from the top portion T of the circular arc portion 31a toward the side of the pair of flat plate portions 31b (that is, up and down in FIG. 5), it is possible to make a portion of the gear case 41, which corresponds to the top portion T of the circular arc portion 31a, thinner. Therefore, it is possible to dispose the first coupling portion 72 of the output shaft 70 so as to be further adjacent to the gear case 41. This makes it possible to establish both further miniaturization of the motor 20 with the speed reduction mechanism and improvement of the connecting workability of the drive shaft 14. Further, since a mounting space of the motor 20 with the speed reduction mechanism can be narrowed, it is possible to apply the narrowed space to an opening amount of the opening/closing body. Therefore, it becomes possible to enlarge the opening amount of the opening/closing body.

As described above in detail, according to the present embodiment, the motor 20 with the speed reduction mechanism includes the first mount 45a and the second mount 46a; these first and second mounts 45a and 46a are respectively provided on the same plane that is provided in parallel to the armature shaft 34 (or the worm shaft 50) and the output shaft 70; and when the gear case 41 is viewed from the direction in which the armature shaft 34 (or the worm shaft 50) does not overlap the output shaft 70, the first mount 45a is provided on the armature shaft extension region AR1 that is formed by causing the armature shaft 34 to extend in the axial direction thereof, and the second mount 46a is provided on the output shaft extension region AR2 that is formed by causing the output shaft 70 to extend in the axial direction thereof.

Thus, even in a case where the two fixed portions are provided, the armature shaft 34 (that is, the worm shaft 50) and the output shaft 70 are rotated, and a reaction force to twist the gear case 41 acts on the gear case 41, then it is possible to effectively suppress distortion and the like of the gear case 41 in addition to a postural change and backlash of the gear case 41. This is because the first mount 45a is provided on the armature shaft extension region AR1 and the second mount 46a is provided on the output shaft extension region AR2.

Further, since the first mount 45a is provided on the armature shaft extension region AR1 and the second mount 46a is provided on the output shaft extension region AR2, it is possible to suppress the gear case 41 from increasing in size to the direction intersecting the axial directions of the armature shaft 34 (that is, the worm shaft 50) and the output shaft 70.

Moreover, according to the present embodiment, the first mount 45a and the second mount 46a are provided so as to shift to each other in the axial directions of the armature shaft 34 (or the worm shaft 50) and the output shaft 70. Therefore, it is possible to fix the motor 20 with the speed reduction mechanism along the longitudinal direction thereof with good balance. Therefore, it is possible to further suppress a postural change of the motor 20 with the speed reduction mechanism, and this makes it possible to improve silence further.

Further, according to the present embodiment, the first flange part 44c and the second flange part 44d are respectively provided on the output shaft housing portion 44 and the second cover member 44b. The first flange part 44c and the second flange part 44d are disposed coaxially with the output shaft 70. The first flange part 44c and the second flange part 44d project in the axial direction of the output shaft 70, whereby each of the first flange part 44c and the second flange part 44d is inserted into the inserting recessed portion DP of the mounting bracket BR, and supported. This makes it possible to position the motor 20 with the speed reduction mechanism at the predetermined position on the roof. Therefore, it becomes possible to easily carry out an installation work of the motor 20 with the speed reduction mechanism.

The present invention is not limited to the embodiment described above, and it goes without saying that various modifications can be made without departing from the scope of the present invention. For example, the case where the sunshade 12 (see FIG. 1) as the opening/closing body provided on the roof of the vehicle is driven to be opened and closed by rotation of the output shaft 70 has been illustrated in the embodiment described above. However, the present invention is not limited to this case. By using the sunroof as the opening/closing body, the sunroof may be driven to be opened and closed by rotation of the output shaft 70.

Further, in the embodiment described above, the case where the present invention is applied to a driving source of the electric sunshade apparatus 10 mounted on the roof of the vehicle has been illustrated. However, the present invention is not limited to this. For example, the present invention can be applied to a driving source of a slide door apparatus, a power window apparatus, or the like mounted on a door of a vehicle.

Otherwise, quality of material, a shape, a dimension, the number, an installation location, and the like of each of the components of the motor with the speed reduction mechanism according to the embodiment described above are arbitrary so long as each of them can achieve the present invention. Further, they are not limited to those in the embodiment described above.

### INDUSTRIAL APPLICABILITY

The motor with the speed reduction mechanism is used as a driving source for an electric sunroof apparatus, an electric sunshade apparatus, or the like, which is mounted on a ceiling of a vehicle such as an automobile, to drive an opening/closing body such as a sunroof or a sunshade so as to be opened and closed.

## Claims

1. A motor with a speed reduction mechanism, the motor configured to reduce rotation of a rotating shaft to output the reduced rotation, the motor with the speed reduction mechanism comprising:
an output shaft provided in parallel to the rotating shaft;
a case configured to rotatably house the rotating shaft and the output shaft; and
a first mount and a second mount provided on the case, each of the first and second mounts being attached to a mounting target, wherein
the first mount and the second mount are respectively provided on a same plane that is provided in parallel to the rotating shaft and the output shaft, and
when the case is viewed from a direction in which the rotating shaft does not overlap the output shaft, the first mount is provided on a rotating shaft extension region and the second mount is provided on an output shaft extension region, the rotating shaft extension region being formed by causing the rotating shaft to extend in an axial direction of the rotating shaft, the output shaft extension region being formed by causing the output shaft to extend in an axial direction of the output shaft.

2. The motor with the speed reduction mechanism according to claim 1,
wherein the first mount and the second mount are provided so as to shift to each other in the axial directions of the rotating shaft and the output shaft.

3. The motor with the speed reduction mechanism according to claim 1,
wherein annular flanges are provided in the case and disposed coaxially with the output shaft, each of the annular flanges projecting in the axial direction of the output shaft and is supported by the mounting target.

4. The motor with the speed reduction mechanism according to claim 3,
wherein each of the annular flanges is inserted into an inserting recessed portion of the mounting target.

5. The motor with the speed reduction mechanism according to claim 1,
wherein the output shaft is configured to drive an opening/closing body provided on a ceiling of a vehicle to be opened and closed.
